# FASCICULE DE BREVET EUROPEEN

(11) **EP 4 551 802 B1**
(45) Date de publication et mention de la délivrance du brevet: **01.04.2026**
(21) Numéro de dépôt: 23755446.4
(22) Date de dépôt: 28.06.2023
(51) Int. Cl.: F02C 6/14, F02K 5/00

(54) **TURBOMACHINE HYBRIDE AUTONOME**
AUTONOME HYBRIDTURBOMASCHINE
SELF-CONTAINED HYBRID TURBOMACHINE

(30) Priorité: 05.07.2022 FR 2206866
(43) Date de publication de la demande: 14.05.2025
(73) Titulaire: Safran Electrical & Power, 31702 Blagnac Cedex (FR)
(72) Inventeur: MICHAUD, Benoît, Lucien, 77550 MOISSY-CRAMAYEL (FR); DELBOSC, Philippe, 77550 MOISSY-CRAMAYEL (FR)
(74) Mandataire: Ernest Gutmann - Yves Plasseraud S.A.S.
(86) Numéro de dépôt international: PCT/FR2023/050980
(87) Numéro de publication internationale: WO 2024/009020

(56) Documents cités:
- EP-A2- 3 633 160
- US-A1- 2015 249 362
- US-A1- 2016 096 632

## Description

### Domaine technique de l'invention

Le domaine de l'invention est celui des turbomachines aéronautiques, et en particulier celui des moteurs d'aéronefs réalisés sous la forme de turboréacteurs double corps et double flux. Plus particulièrement, l'invention concerne une turbomachine de ce type, hybride et autonome, pour aéronef.

### Etat de la technique antérieure

L'hybridation thermique/électrique d'une turbomachine d'aéronef est une voie nouvelle permettant d'améliorer le comportement et les performances de ces turbomachines.

Cette hybridation consiste, au travers de machines électriques installés sur les arbres rotatifs de la turbomachine, à injecter ou prélever de la puissance mécanique à certains moments et à un certain niveau.

Une exigence clé des turbomachines classiques de propulsion d'aéronef est de garantir un temps de montée maximum à ne pas dépasser entre un régime ralenti, dans lequel le moteur n'exerce qu'une poussée faible, et un régime maximum, dans lequel la poussée du moteur est maximale.

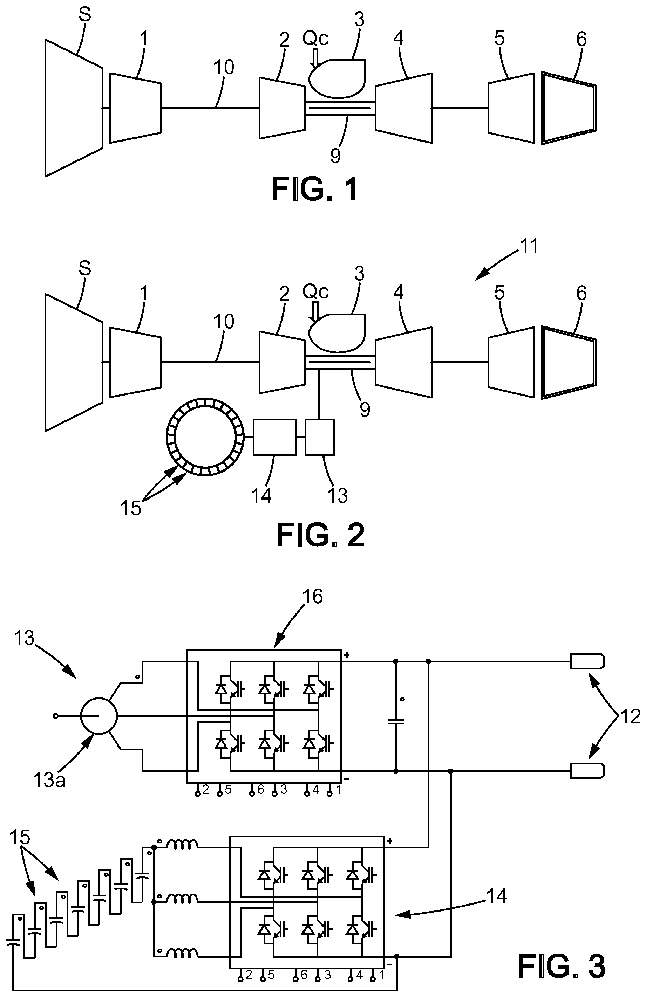

Une turbomachine classique à double corps, double flux, à soufflante, est représentée schématiquement sur la figure 1.

Elle comprend classiquement, d'amont en aval dans le sens de l'écoulement des gaz, une soufflante S, un compresseur basse pression 1, un compresseur haute pression 2, une chambre de combustion 3 qui reçoit un débit de carburant Qc, une turbine haute pression 4, une turbine basse pression 5 et une tuyère primaire d'échappement 6.

Le compresseur basse pression 1 et la turbine basse pression 5 sont reliés par un arbre basse pression 10 et forment ensemble un corps basse pression.

Le compresseur haute pression 2 et la turbine haute pression 4 sont reliés par un arbre haute pression 9 et forment ensemble, avec la chambre de combustion, un corps haute pression.

La soufflante S, qui est entraînée par l'arbre basse pression 10, soit directement, soit par l'intermédiaire d'un réducteur, comprime l'air issu de l'entrée d'air. Cet air se divise en aval de la soufflante S entre un flux d'air secondaire qui est dirigé directement vers une tuyère secondaire (non représentée) par laquelle il est éjecté pour participer à la poussée fournie par la turbomachine, et un flux dit primaire qui pénètre dans le générateur de gaz, constitué par les corps basse et haute pression, puis qui est éjecté dans la tuyère primaire 6.

Classiquement, il est connu d'installer des générateurs électriques dans la turbomachine pour alimenter le réseau électrique de bord. Ces générateurs sont entrainés par l'arbre haute pression 9 au travers d'une boîte d'accessoires afin de convertir l'énergie mécanique en énergie électrique destinée aux systèmes secondaires à bord de l'aéronef.

Une variante peut consister à remplacer au moins un des générateurs électriques par au moins un démarreur afin d'assurer le démarrage de la turbomachine à partir d'énergie électrique. Le démarrage se fait en pilotant le démarreur électrique via un convertisseur situé soit dans la zone moteur, soit dans la zone cabine, s'alimentant par une source externe à la turbomachine à démarrer. Cette source peut être soit un groupe de parc au sol, soit une autre source électrique de bord qui a été préalablement mise en service (générateur auxiliaire de puissance, générateur électrique des autres turbomachines). Une fois la turbomachine démarrée, le démarreur électrique change de mode pour fonctionner exclusivement en générateur électrique.

Cependant, l'emploi d'un tel système pour assister la turbomachine en fournissant une quantité d'énergie électrique importante n'est pas toujours satisfaisant car il nécessite le recours à une source d'énergie électrique de forte capacité située en zone avion et des connexions électriques associées, ce qui génère un encombrement important et des pertes électriques élevées.

Les documents EP 3 633 160 A2 et US 2016/0096632 A1 font partie de l'état de la technique.

### Présentation de l'invention

L'invention vise à remédier à ces inconvénients, en fournissant une turbomachine hybride autonome. A cet effet, l'invention a pour objet une turbomachine double corps double flux pour aéronef, selon la revendication 1, comprenant un compresseur basse pression, un compresseur haute pression, une chambre de combustion, une turbine haute pression et une turbine basse pression, ladite turbine basse pression étant reliée audit compresseur basse pression par un arbre de rotation basse pression et ladite turbine haute pression étant reliée audit compresseur haute pression par un arbre de rotation haute pression, la turbomachine comprenant également un dispositif d'injection de puissance mécanique sur au moins un des dits arbres de rotation,
caractérisée en ce que la turbomachine comprend des composants capacitifs adaptés pour alimenter la turbomachine en énergie électrique à travers ledit dispositif d'injection de puissance mécanique, lesdits composants capacitifs étant disposés sur la turbomachine ou sur une structure de support de la turbomachine et agencés pour former au moins une paire de cercles concentriques, lesdites paires de cercles étant centrées sur un axe principal de la turbomachine, les cercles de composants capacitifs d'une même paire de cercles étant radialement au voisinage l'un de l'autre.

Les composants capacitifs peuvent notamment former deux paires de cercles écartées axialement l'une de l'autre.

Ladite structure de support peut être une nacelle recevant la turbomachine.

Une telle turbomachine permet un fonctionnement hybride autonome, avec une capacité de stockage d'énergie sous forme électrique et/ou électrochimique, et de restitution d'énergie au système propulsif, disposée au voisinage de la nacelle afin de limiter l'encombrement et la masse des connexions ainsi que les pertes électriques.

Le dispositif d'injection de puissance peut avantageusement également fonctionner comme un générateur électrique.

Les composants capacitifs peuvent être des supercondensateurs, notamment des supercondensateurs à nanotubes de carbone.

De tels composants capacitifs présentent une faible résistance interne, permettant de délivrer une puissance élevée pendant un temps réduit, et ainsi d'assister la propulsion au cours de phases critiques comme pendant le décollage de l'aéronef.

La puissance fournie peut par exemple être de l'ordre de 500 kW, délivrée pendant un temps de l'ordre d'une seconde.

Alternativement, les supercondensateurs peuvent être des supercondensateurs à double couche électrochimiques (également appelés EDLC, pour *electrochemical double layer capacitor* en anglais), ou bien des supercondensateurs hybrides (aussi appelés LIC, pour *Lithium lon Capacitor* en anglais).

Les composants capacitifs peuvent être connectés en série et présenter une résistance équivalente inférieure ou égale à 100 µOhm par composant capacitif.

Une telle caractéristique permet de maintenir la tension sous laquelle l'énergie électrique est restituée supérieure ou égale à 400 V pendant le temps requis.

Pour chaque paire de cercles de composants capacitifs, les composants capacitifs d'un cercle radialement interne sont disposés circonférentiellement décalés d'une demi-largeur circonférentielle des composants capacitifs par rapport aux composants capacitifs d'un cercle radialement externe.

Un tel arrangement permet de réduire la longueur des connexions entre les composants capacitifs, en disposant les connecteurs des composants capacitifs des deux cercles radialement au droit les uns des autres.

Chaque composant capacitif peut comprendre un connecteur d'entrée et un connecteur de sortie disposés sur une même face de connexion axiale du composant capacitif, les faces de connexion des composants d'une même paire de cercles étant orientées dans une même direction axiale.

Un tel arrangement permet de réduire encore les longueurs des connexions entre les composants capacitifs.

Pour chaque paire de cercles concentriques de composants capacitifs, les connecteurs d'entrée et de sortie de chaque composant de chacun des cercles sont reliés à des connecteurs de sortie et d'entrée, respectivement, de composants de l'autre cercle, à l'exception d'un premier composant et d'un dernier composant de la paire de cercles.

Un tel arrangement permet de connecter en série tous les composants capacitifs des deux cercles avec des connexions de faible longueur totale.

La turbomachine peut comprendre deux paires de cercles de composants capacitifs, les faces de connexion des composants capacitifs de chaque paire de cercle étant agencées en vis-à-vis des faces de connexion des composants capacitifs de l'autre paire de cercle.

Un tel arrangement permet de connecter simplement en série les composants des deux paires de cercles, et aussi de réduire les effets de champ magnétiques générés par la circulation du courant électrique dans les interconnexions.

La turbomachine peut comprendre deux paires de cercles concentriques de composants capacitifs, les composants des deux paires de cercles étant connectés en série ensemble. L'interconnexion entre les deux paires de cercles peut être adaptée pour être reliée électriquement à un châssis d'aéronef pour créer une référence de potentiel, et/ou être pour être reliée à un réseau électrique d'aéronef pour servir de référence de masse.

Les paires de cercles de composants capacitifs peuvent être connectées en parallèles les unes aux autres.

Une telle caractéristique permet de rendre le système compatible avec un réseau 540V (+/-270V) ou un réseau 230/400 VAC à fréquence fixe ou variable.

Dans ce cas, les paires de cercles peuvent être successivement décalées pour continuer à garantir l'effet d'annulation des champs magnétiques entre les différentes interconnexions des composants capacitifs.

L'invention concerne également un ensemble propulsif comprenant une turbomachine comme plus haut et au moins une nacelle recevant la turbomachine, les composants capacitifs étants disposés dans un espace délimité radialement entre un carter interne et un carter externe de la nacelle.

La disposition des composants capacitifs dans la nacelle permet de bénéficier d'un environnement thermique avantageux et d'avoir une distance faible entre les composants et le dispositif d'injection de puissance.

### Brève description des figures

La figure 1 est une représentation schématique d'une turbomachine double corps à double flux selon l'état d la technique,
la figure 2 est une représentation schématique d'une turbomachine selon l'invention,
la figure 3 est un schéma électrique d'un ensemble de stockage d'énergie de la turbomachine de la figure 2,
la figure 4 est une vue schématique en coupe axiale d'un ensemble propulsif comprenant une nacelle et la turbomachine de la figure 2,
la figure 5 est une vue schématique en coupe radiale de l'ensemble de stockage d'énergie de la figure 3,
la figure 6 est une vue schématique de dessus de l'ensemble de stockage d'énergie de la figure 5,
la figure 7 est un schéma électrique d'un ensemble de stockage d'énergie selon un autre mode de réalisation de l'invention, et
la figure 8 est une vue schématique de dessus d'un ensemble de stockage d'énergie selon un autre mode de réalisation de l'invention.

### Description détaillée de l'invention

La figure 2 représente une turbomachine 11 selon l'invention, installée sur un aéronef. La turbomachine 11, de manière similaire à celle de la figure 1, comprend d'amont en aval dans le sens de l'écoulement des gaz, une soufflante S, un compresseur basse pression 1, un compresseur haute pression 2, une chambre de combustion 3 qui reçoit un débit de carburant Qc, une turbine haute pression 4, une turbine basse pression 5 et une tuyère primaire d'échappement 6.

Le compresseur basse pression 1 et la turbine basse pression 5 sont reliés par un arbre basse pression 10 et forment ensemble un corps basse pression.

Le compresseur haute pression 2 et la turbine haute pression 4 sont reliés par un arbre haute pression 9 et forment ensemble, avec la chambre de combustion 3, un corps haute pression. La soufflante S, qui est entraînée par l'arbre basse pression 10, soit directement, soit par l'intermédiaire d'un réducteur, comprime l'air issu de l'entrée d'air. Cet air se divise en aval de la soufflante S entre un flux d'air secondaire qui est dirigé directement vers une tuyère secondaire (non représentée) par laquelle il est éjecté pour participer à la poussée fournie par la turbomachine, et un flux dit primaire qui pénètre dans le générateur de gaz, constitué par les corps basse et haute pression, puis qui est éjecté dans la tuyère primaire 6.

La turbomachine 11 comprend également un dispositif d'injection de puissance mécanique 13 conjugué à l'arbre haute pression 9. Ledit dispositif d'injection de puissance mécanique 13 est apte à convertir une puissance électrique en puissance mécanique contribuant à la rotation de l'arbre haute pression 9, et à l'inverse apte à prélever une puissance mécanique sur l'arbre haute pression 9 pour la convertir en puissance électrique en vue d'un stockage et/ou d'alimenter des charges 12 de l'aéronef.

Le dispositif d'injection 13 est notamment apte à fonctionner alternativement comme un moteur électrique et comme un générateur, selon les phases de vol de l'aéronef, et à prélever une puissance mécanique sur l'arbre haute pression 9 pour la convertir en puissance électrique. Le dispositif d'injection 13 est par exemple raccordé à l'arbre basse pression par une boite d'accessoire (non représentée) engrenée sur l'arbre haute pression 9.

La turbomachine 11 comprend également un ensemble de stockage d'énergie électrique, ledit ensemble comprenant un convertisseur de puissance 14 et une pluralité d'éléments de stockage 15 de type capacitif.

Les éléments de stockage d'énergie 15 sont notamment des supercondensateurs, par exemple des supercondensateurs à nanotubes de carbone.

Un ordre de grandeur typique d'une assistance au démarrage d'une turbomachine est la fourniture d'une puissance de l'ordre de 500 kW pendant une durée de l'ordre de 1 s, l'énergie totale fournie est donc de l'ordre à 500 kJ. Dans ce cas, le dimensionnement de l'ensemble de stockage à super condensateurs est défini à la fois par la densité de puissance des composants capacitifs et par la densité d'énergie qu'ils stockent.

A ce titre, des super condensateurs réalisés avec des nanotubes de carbone et du graphène permettent d'accroître la conductivité électrique et ainsi de diviser par 10 (ou plus) la résistivité des composants, ce qui permet au système de stockage d'être adapté à des cycles de fonctionnement de l'ordre de la seconde (au lieu de 10 à 20 secondes pour les super capacités classiques).

L'ensemble de stockage comprend par exemple 296 supers condensateurs à nanotubes de carbone de 900F connectés en série, ce qui permet d'obtenir une résistance série équivalente (ESR) inférieure à 100 µOhms par composant.

L'ensemble de stockage d'énergie est représenté de manière schématique sur la figure 3, qui montre l'architecture électrique dudit ensemble. Le dispositif d'injection 13 comprend de manière classique une machine électrique 13a et un onduleur 16, ce dernier étant connecté en parallèle au convertisseur de puissance 14, ici un convertisseur de type DC/DC.

Ce convertisseur 14, de type hacheur, est configuré pour contrôler la puissance prélevée ou injectée sur l'arbre haute pression 9 ou délivrée aux charges 12.

L'ensemble de stockage d'énergie est également connecté en parallèle aux charges 12 de l'aéronef.

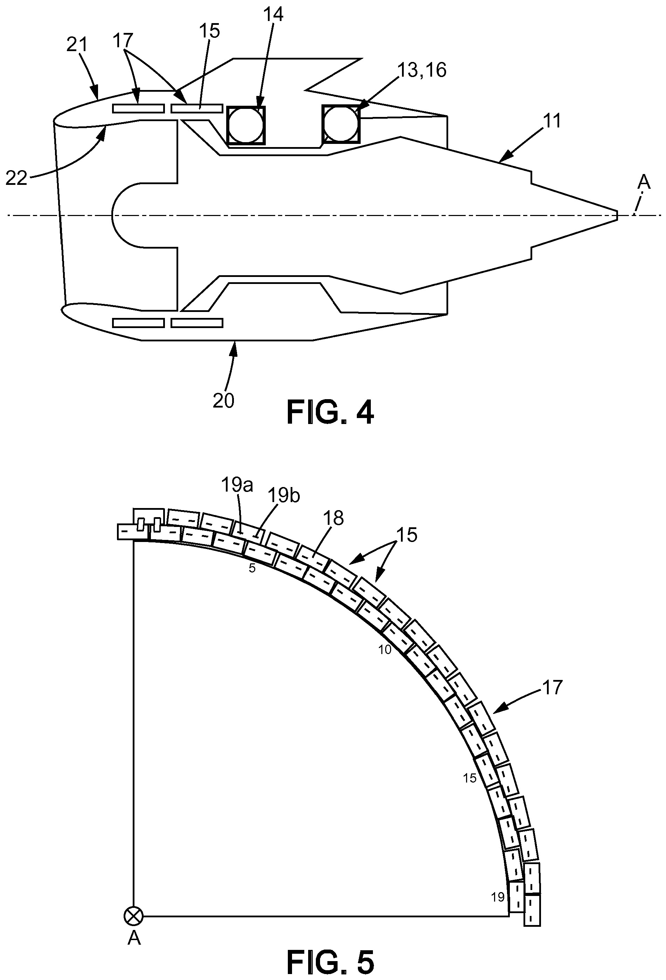

Comme représenté sur la figure 4, l'ensemble de stockage d'énergie est entièrement intégré à l'écart de la zone avion, et notamment entièrement compris dans une nacelle 20 portant la turbomachine 11 et formant avec la turbomachine 11 un ensemble propulsif hybride autonome. Les supercondensateurs 15 sont agencés circonférentiellement autour d'un axe principal A de la turbomachine 11. Cela permet de réduire la longueur des connexions et donc la masse totale du système, ainsi que les pertes d'énergie dans lesdites connexions.

Les supercondensateurs 15 sont notamment de forme prismatique et sont répartis pour former deux paires 17 de cercles concentriques dans la nacelle 20. Lesdits cercles de supercondensateurs 15 sont notamment radialement compris entre un carter externe 21 et un carter interne 22 de ladite nacelle 20, et sont centrés sur l'axe principal A.

Une telle forme aplatie des condensateurs 15 permet d'obtenir une épaisseur de quelques centimètres (de l'ordre de 5 cm dans l'exemple ci-dessus) compatible avec le dimensionnement aérodynamique de la nacelle 20.

L'emplacement des super condensateurs 15 dans la nacelle 20 est avantageux puisque ceuxci bénéficient d'un environnement thermique favorable (contrairement aux températures dans le moteur qui peuvent atteindre plusieurs centaines de degrés) et compatible avec les supercondensateurs.

L'électronique de puissance peut être positionnée dans le compartiment dans la nacelle 20. Le dispositif d'injection de puissance 13 est classiquement positionné sur une boite de transmission de puissance (AGB « Accessories Gear Box ») et le convertisseur 14 peut être avantageusement positionné dans les diverses localisations situées entre les super condensateurs 15 et le dispositif d'injection de puissance 13.

Une des paires 17 de cercles est représentée en détail sur la figure 5, en coupe dans un plan orthogonal à l'axe principal A.

Les supercondensateurs 15 du cercle radialement externe sont décalés circonférentiellement par rapport aux supercondensateurs du cercle radialement externe d'une demi-largeur circonférentielle des supercondensateurs 15.

Chaque supercondensateur 15 présente une forme sensiblement parallélépipédique avec une face de connexion 18 axiale comprenant un premier connecteur 19a dit d'entrée et un second connecteur 19b dit de sortie.

Ainsi, pour chaque paire de cercles 17, les connecteurs d'entrée 19a des supercondensateurs 15 de chaque cercle sont situés radialement au droit des connecteurs de sortie 19b des condensateurs 15 de l'autre cercle.

Les connecteurs d'entrée 19a et de sortie 19b de chaque composant capacitif 15 de chacun des cercles sont reliés à des connecteurs de sortie 19b et d'entrée 19a, respectivement, de composants capacitifs 15 de l'autre cercle, à l'exception d'un premier composant 15a et d'un dernier composant 15b de la paire de cercles 17.

Les premier et dernier composant 15a, 15b de chaque paire de cercles 17 sont les composants capacitifs 15 par lesquels le demi-bloc capacitif formé par les composants 15 de la paire de cercle est connecté à l'autre demi-bloc ou au convertisseur 14.

Cela permet de connecter tous les condensateurs 15 de la paire de cercles 17 en série avec des interconnexions de longueur minimale. Les interconnexions reliant les connecteurs d'entrée 19a aux connecteurs de sortie 19b sont notamment de type jeu de barres, et s'étendent radialement. Cela permet de réduire l'inductance et la résistance totale des interconnexions.

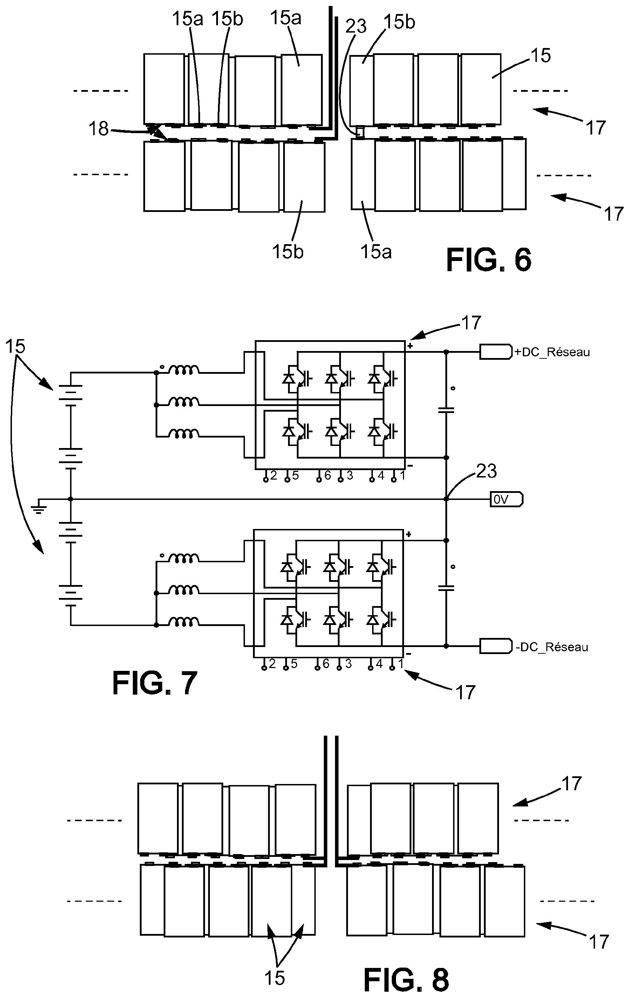

De plus, comme représenté sur la figure 6, la disposition décalée des cercles concentriques permet de placer les interconnexions des supercondensateurs 15 de chaque paire 17 de cercles axialement en face les unes des autres. Une simple interconnexion 23 entre les 2 paires de cercles 17 en vis-à-vis permet de relier les deux « demi-blocs » de condensateurs 15 en leur point milieu.

Grace à cet arrangement, les interconnexions axialement en vis-à-vis présentent des sens de parcours du courant inverses, l'une étant « montante » radialement quand l'autre est « descendante » radialement (les termes montant et descendant étant relatif au sens de parcours du courant respectivement à l'écart de l'axe principal A et en direction de l'axe principal A). Ceci a pour effet que les champs magnétiques créés par ces interconnexions en vis-à-vis sont en opposition et ont tendance à s'annuler, ce qui se traduit par une forte réduction de l'inductance de câblage.

Selon une variante représentée sur la figure 7, l'interconnexion 23 entre les deux paires de cercles concentriques 17 peut être électriquement reliée au châssis de l'aéronef pour créer une référence de potentiel, et/ou être relié au réseau électrique de l'avion pour servir de référence de masse.

Selon une autre variante représentée sur la figure 8, les deux demi-blocs constitués par les condensateurs 15 de chacune des deux paires de cercle 17 peuvent être connectés en parallèle, pour rendre le système compatible avec un réseau 540V (+/-270V) ou un réseau 230/400 VAC à fréquence fixe ou variable. Dans ce cas, le deuxième demi-bloc doit être décalé pour continuer à garantir l'effet d'annulation des champs magnétiques entre les différentes interconnexions des condensateurs 15.

Alternativement, les super condensateurs peuvent être adaptés pour des cycles moteur plus longs, allant jusqu'à 5 s, avec des puissances limitées à 200 kW. Ce type de cycle est typiquement compatible avec des super condensateurs à double couche électrochimiques (également appelés EDLC, pour *electrochemical double layer capacitor* en anglais). Des condensateurs de ce type permettent d'augmenter la durée de cycle jusqu'à 10s, à condition d'accepter une augmentation du volume de stockage.

Il serait également possible d'augmenter encore la durée du cycle jusqu'à 20 s ou 30 s en utilisant des super condensateurs hybrides (aussi appelés LIC, pour *Lithium lon Capacitor* en anglais) sous réserve d'ajouter un système de préchauffage, ou de rapprocher les condensateurs de la turbomachine, afin de garantir une température supérieure à -10°C.

## Revendications

1. Turbomachine double corps double flux pour aéronef, comprenant un compresseur basse pression (1), un compresseur haute pression (2), une chambre de combustion (3), une turbine haute pression (4) et une turbine basse pression (5), ladite turbine basse pression (5) étant reliée audit compresseur basse pression (1) par un arbre de rotation basse pression (10) et ladite turbine haute pression (4) étant reliée audit compresseur haute pression (2) par un arbre de rotation haute pression (9),
la turbomachine (11) comprenant également un dispositif d'injection de puissance mécanique (13) sur au moins un des arbres de rotation (9, 10),
et des composants capacitifs (15) adaptés pour alimenter la turbomachine (11) en énergie électrique à travers ledit dispositif d'injection de puissance mécanique (13), lesdits composants capacitifs (15) étant disposés sur la turbomachine (11) ou sur une structure de support de la turbomachine (11) et agencés pour former au moins une paire de cercles (17) concentriques, lesdites paires de cercles (17) étant centrées sur un axe principal (A) de la turbomachine (11), les cercles de composants capacitifs (15) d'une même paire de cercles (17) étant radialement au voisinage l'un de l'autre,
**caractérisée en ce que** pour chaque paire de cercles (17) de composants capacitifs (15), les composants capacitifs (15) d'un cercle radialement interne sont disposés circonférentiellement décalés d'une demi-largeur circonférentielle des composants capacitifs (15) par rapport aux composants capacitifs (15) d'un cercle radialement externe.

2. Turbomachine (11) selon la revendication précédente, dans laquelle les composants capacitifs (15) sont des supercondensateurs, notamment des supercondensateurs à nanotubes de carbone.

3. Turbomachine (11) selon l'une des revendications précédentes, dans laquelle les composants capacitifs (15) sont connectés en série et présentent une résistance équivalente inférieure ou égale à 100 µOhm par composant capacitif (15).

4. Turbomachine (11) selon l'une des revendications précédentes, dans laquelle chaque composant capacitif (15) comprend un connecteur d'entrée (19a) et un connecteur de sortie (19b) disposés sur une même face de connexion (18) axiale du composant capacitif (15), les faces de connexion (18) des composants d'une même paire de cercles (17) étant orientées dans une même direction axiale.

5. Turbomachine (11) selon la revendication précédente, dans laquelle, pour chaque paire de cercles (17) concentriques de composants capacitifs (15), les connecteurs d'entrée (19a) et de sortie (19b) de chaque composant capacitif (15) de chacun des cercles sont reliés à des connecteurs de sortie (19b) et d'entrée (19a), respectivement, de composants capacitifs (15) de l'autre cercle, à l'exception d'un premier composant (15a) et d'un dernier composant (15b) de la paire de cercles (17).

6. Turbomachine (11) selon la revendication 4 ou 5, dans laquelle la turbomachine (11) comprend deux paires de cercles (17) de composants capacitifs (15), les faces de connexion (18) des composants capacitifs (15) de chaque paire de cercle (17) étant agencées en vis-à-vis des faces de connexion (18) des composants capacitifs (15) de l'autre paire de cercle (17).

7. Turbomachine (11) selon l'une des revendications précédentes, dans laquelle la turbomachine (11) comprend deux paires de cercles (17) de composants capacitifs (15), les composants capacitifs (15) des deux paires de cercles (17) étant connectés en série ensemble, les deux paires de cercles (17) étant reliées électriquement par une interconnexion (23).

8. Turbomachine (11) selon la revendication précédente, dans laquelle l'interconnexion (23) entre les deux paires de cercles (17) est adaptée pour être reliée électriquement à un châssis d'aéronef pour créer une référence de potentiel, et/ou être pour être reliée à un réseau électrique d'aéronef pour servir de référence de masse.

9. Turbomachine selon l'une des revendications 1 à 6, dans laquelle les paires de cercles (17) de composants capacitifs (15) sont connectées en parallèles les unes aux autres.

10. Ensemble propulsif pour aéronef comprenant une turbomachine (11) selon l'une des revendications précédentes et au moins une nacelle (20) recevant la turbomachine (11), les composants capacitifs (15) étants disposés dans un espace délimité radialement entre un carter interne (22) et un carter externe (21) de la nacelle (20).

## Patentansprüche

1. Zweiwellen-Mantelstrom-Triebwerk für Luftfahrzeuge, mit einem Niederdruckverdichter (1), einem Hochdruckverdichter (2), einer Brennkammer (3), einer Hochdruckturbine (4) und einer Niederdruckturbine (5), wobei die Niederdruckturbine (5) über eine Niederdruck-Drehwelle (10) mit dem Niederdruckverdichter (1) verbunden ist und die Hochdruckturbine (4) über eine Hochdruck-Drehwelle (9) mit dem Hochdruckverdichter (2) verbunden ist,
wobei das Triebwerk (11) an zumindest einer der Drehwellen (9, 10) ferner eine mechanische Leistungszuführvorrichtung (13) umfasst und kapazitive Komponenten (15) enthält, die dazu ausgelegt sind, das Triebwerk (11) über die mechanische Leistungszuführvorrichtung (13) mit elektrischer Energie zu versorgen, wobei die kapazitiven Komponenten (15) an dem Triebwerk (11) oder an einer Tragkonstruktion des Triebwerks (11) angeordnet und dazu ausgelegt sind, zumindest ein Paar konzentrischer Kreise (17) zu bilden, wobei die Paare von Kreisen (17) auf einer Hauptachse (A) des Triebwerks (11) zentriert sind, wobei die Kreise aus kapazitiven Komponenten (15) desselben Paares von Kreisen (17) radial aneinandergrenzen,
**dadurch gekennzeichnet, dass** bei jedem Paar von Kreisen (17) aus kapazitiven Komponenten (15) die kapazitiven Komponenten (15) eines radial inneren Kreises in Umfangsrichtung um eine halbe Umfangsbreite der kapazitiven Komponenten (15) versetzt zu den kapazitiven Komponenten (15) eines radial äußeren Kreises angeordnet sind.

2. Triebwerk (11) nach dem vorstehenden Anspruch,
wobei die kapazitiven Komponenten (15) Superkondensatoren sind, insbesondere Superkondensatoren mit Kohlenstoffnanoröhren.

3. Triebwerk (11) nach einem der vorstehenden Ansprüche,
wobei die kapazitiven Komponenten (15) in Reihe geschaltet sind und einen Ersatzwiderstand von weniger als oder gleich 100 µOhm pro kapazitiver Komponente (15) aufweisen.

4. Triebwerk (11) nach einem der vorstehenden Ansprüche,
wobei jede kapazitive Komponente (15) einen Eingangsanschluss (19a) und einen Ausgangsanschluss (19b) umfasst, die auf derselben axialen Anschlussfläche (18) der kapazitiven Komponente (15) angeordnet sind, wobei die Anschlussflächen (18) der Komponenten desselben Paares von Kreisen (17) in die gleiche axiale Richtung weisen.

5. Triebwerk (11) nach dem vorstehenden Anspruch,
wobei bei jedem Paar von konzentrischen Kreisen (17) aus kapazitiven Komponenten (15) der Eingangs- (19a) und der Ausgangsanschluss (19b) jeder kapazitiven Komponente (15) der jeweiligen Kreise mit dem jeweiligen Ausgangs- (19b) bzw. Eingangsanschluss (19a) der kapazitiven Komponenten (15) des anderen Kreises verbunden sind, mit Ausnahme einer ersten Komponente (15a) und einer letzten Komponente (15b) des Paares von Kreisen (17).

6. Triebwerk (11) nach Anspruch 4 oder 5,
wobei das Triebwerk (11) zwei Paare von Kreisen (17) aus kapazitiven Komponenten (15) umfasst, wobei die Anschlussflächen (18) der kapazitiven Komponenten (15) jedes Paares von Kreisen (17) den Anschlussflächen (18) der kapazitiven Komponenten (15) des anderen Paares von Kreisen (17) gegenüberliegend angeordnet sind.

7. Triebwerk (11) nach einem der vorstehenden Ansprüche,
wobei das Triebwerk (11) zwei Paare von Kreisen (17) aus kapazitiven Komponenten (15) umfasst, wobei die kapazitiven Komponenten (15) der beiden Paare von Kreisen (17) in Reihe zueinander geschaltet sind und die beiden Paare von Kreisen (17) durch einen Zwischenanschluss (23) elektrisch miteinander verbunden sind.

8. Triebwerk (11) nach dem vorstehenden Anspruch,
wobei der Zwischenanschluss (23) zwischen den beiden Paaren von Kreisen (17) dazu ausgelegt ist, elektrisch mit einem Luftfahrzeugrahmen verbunden zu werden, um einen Potentialbezugspunkt zu schaffen, und/oder mit einem Stromnetz des Luftfahrzeugs verbunden zu werden, um als Massebezugspunkt zu dienen.

9. Triebwerk nach einem der Ansprüche 1 bis 6,
wobei die Paare von Kreisen (17) aus kapazitiven Komponenten (15) parallel zueinander geschaltet sind.

10. Antriebsanordnung für ein Luftfahrzeug, umfassend ein Triebwerk (11) nach einem der vorstehenden Ansprüche und zumindest eine Triebwerksgondel (20), die das Triebwerk (11) aufnimmt, wobei die kapazitiven Komponenten (15) in einem Raum angeordnet sind, der radial zwischen einem inneren Gehäuse (22) und einem äußeren Gehäuse (21) der Triebwerksgondel (20) eingrenzt ist.

## Claims

1. Twin-spool turbofan type of turbine engine for an aircraft, comprising a low-pressure compressor (1), a high-pressure compressor (2), a combustion chamber (3), a high-pressure turbine (4), and a low-pressure turbine (5), said low-pressure turbine (5) being connected to said low-pressure compressor (1) by a rotating low-pressure shaft (10) and said high-pressure turbine (4) being connected to said high-pressure compressor (2) by a rotating high-pressure shaft (9),
the turbine engine (11) also comprising a mechanical power feed device (13) on at least one of the rotating shafts (9, 10), and capacitive components (15) adapted to supply the turbine engine (11) with electrical energy through said mechanical power feed device (13), said capacitive components (15) being arranged on the turbine engine (11) or on a support structure of the turbine engine (11) and being arranged to form at least one pair of concentric circles (17), said pairs of circles (17) being centered on a main axis (A) of the turbine engine (11), the circles of a same pair of circles (17) of capacitive components (15) being radially close to one another,
**characterized in that**, for each pair of circles (17) of capacitive components (15), the capacitive components (15) of a radially inner circle are arranged so as to be circumferentially offset by half the circumferential width of the capacitive components (15), relative to the capacitive components (15) of a radially outer circle.

2. Turbine engine (11) according to the preceding claim, wherein the capacitive components (15) are supercapacitors, in particular carbon nanotube supercapacitors.

3. Turbine engine (11) according to one of the preceding claims, wherein the capacitive components (15) are connected in series and have an equivalent resistance that is less than or equal to 100 µOhm per capacitive component (15).

4. Turbine engine (11) according to one of the preceding claims, wherein each capacitive component (15) comprises an input connector (19a) and an output connector (19b) which are arranged on a same axial connection face (18) of the capacitive component (15), the connection faces (18) of the components of a same pair of circles (17) being oriented in a same axial direction.

5. Turbine engine (11) according to the preceding claim, wherein, for each pair of concentric circles (17) of capacitive components (15), the input (19a) and output (19b) connectors of each capacitive component (15) of each of the circles are respectively connected to output (19b) and input (19a) connectors of capacitive components (15) of the other circle, with the exception of a first component (15a) and a last component (15b) of the pair of circles (17).

6. Turbine engine (11) according to claim 4 or 5, wherein the turbine engine (11) comprises two pairs of circles (17) of capacitive components (15), the connection faces (18) of the capacitive components (15) of each pair of circles (17) being arranged facing the connection faces (18) of the capacitive components (15) of the other pair of circles (17).

7. Turbine engine (11) according to one of the preceding claims, wherein the turbine engine (11) comprises two pairs of circles (17) of capacitive components (15), the capacitive components (15) of the two pairs of circles (17) being connected together in series, the two pairs of circles (17) being electrically connected by an interconnection (23).

8. Turbine engine (11) according to the preceding claim, wherein the interconnection (23) between the two pairs of circles (17) is adapted to be electrically connected to an aircraft body in order to create a potential reference, and/or be connected to an aircraft electrical system in order to serve as a ground reference.

9. Turbine engine according to one of claims 1 to 6, wherein the pairs of circles (17) of capacitive components (15) are connected to one another in parallel.

10. Propulsion assembly for aircraft, comprising a turbine engine (11) according to one of the preceding claims and at least one nacelle (20) receiving the turbine engine (11), the capacitive components (15) being arranged in a space delimited radially between an inner casing (22) and an outer casing (21) of the nacelle (20).
